# EUROPÄISCHE PATENTSCHRIFT

(11) **EP 1 917 820 B1**
(45) Veröffentlichungstag und Bekanntmachung des Hinweises auf die Patenterteilung: **25.02.2009**
(21) Anmeldenummer: 06778154.2
(22) Anmeldetag: 03.08.2006
(51) Int. Cl.: H04W 16/00, H04W 4/00, H04W 24/00

(54) **VERFAHREN UND ANORDNUNG ZUR ERMITTLUNG EINER FUNKABDECKUNG IN EINEM MEHRZELLEN-MOBILFUNKSYSTEM**
METHOD AND ARRANGEMENT FOR DETERMINATION OF RADIO COVERAGE IN A MULTI-CELLULAR MOBILE RADIO SYSTEM
PROCEDE ET DISPOSITIF POUR DETERMINER UNE COUVERTURE RADIO DANS UN SYSTEME DE TELEPHONIE MOBILE MULTICELLULAIRE

(30) Priorität: 23.08.2005 DE 102005039863
(43) Veröffentlichungstag der Anmeldung: 07.05.2008
(73) Patentinhaber: SIEMENS AKTIENGESELLSCHAFT, 80333 München (DE)
(72) Erfinder: NIENTIEDT, Robert, 33129 Delbrück (DE)
(86) Internationale Anmeldenummer: PCT/EP2006/065022
(87) Internationale Veröffentlichungsnummer: WO 2007/023074

(56) Entgegenhaltungen:
- EP-A2- 0 903 880
- EP-A2- 1 098 544
- EP-A2- 1 154 661
- WO-A-01/28272
- GB-A- 2 361 387
- US-A- 5 987 328

## Beschreibung

Die Erfindung betrifft ein Verfahren zur Ermittlung einer Funkabdeckung in einem Mehrzellen-Mobilfunksystem gemäß des Oberbegriffs des Patentanspruchs 1, eine Anordnung zur Ermittlung der Funkabdeckung in einem Mehrzellen-Mobilfunksystem gemäß des Oberbegriffs des Patentanspruchs 10 sowie eine Verwendung des Verfahrens zur Positionsbestimmung eines mobilen Endgerätes.

In der Kommunikationstechnik und in der Informationstechnik werden häufig Endgeräte, also beispielsweise schnurlose Telefone, Mobilfunkgeräte, Computer, PDA's etc., mobil betrieben und mittels einer Funkverbindung an einer Basisstation, einem so genannten "Access-Point", betrieben. Zur Vergrößerung des geographischen Einsatzgebietes eines solchen mobilen Endgerätes und zur Vergrößerung der gleichzeitig übertragbaren Daten- bzw. Informationsmenge ("Bandbreite") werden häufig zeitgleich mehrere Basisstationen eingesetzt, an denen ein mobiles Endgerät wechselweise betrieben wird. Solche Anordnungen werden häufig als "Mehrzellen-Mobilfunksysteme" bezeichnet. Sie sind als DECT-Systeme für schnurlose Telefone, als GSM-Netze für Mobilfunkgeräte ("Handys") und beispielsweise als WLAN-Netze für die Datenkommunikation bekannt. Den gebräuchlichen Mehrzellen-Mobilfunksystemen ist dabei gemeinsam, das die einzelnen Funkzellen, also die Bereiche, in denen die einzelnen Basisstationen empfangbar sind, einander überlappen, so dass ein mobiles Endgerät durch das Mehrzellen-Mobilfunksystem bewegt werden kann und in einem Überlappungsbereich zwischen zwei Funkzellen eine Verbindungsübergabe ("Hand-over") von einer Basisstation zu einer anderen Basisstation erfolgen kann. Insbesondere in geographisch kleinen Funknetzen kann es dabei vorkommen, dass an einigen oder allen Orten sogar alle Basisstationen empfangen werden können.

Beim Aufbau eines Mehrzellen-Mobilfunksystems muss darauf geachtet werden, dass an jedem Ort, an dem ein mobiles Endgerät möglicherweise betrieben werden soll, zumindest eine der Basisstationen mit einer ausreichenden Empfangsfeldstärke empfangbar ist. Im Idealfall ("Freifeld") kann dabei von einer radialsymmetrischen Verteilung der Empfangsfeldstärke um eine Basisstation herum ausgegangen werden, so dass Basisstationen oft näherungsweise in einem quadratischen Raster auf einer zu versorgenden Fläche angeordnet werden, und somit jede Basisstation eine Funkzelle mit einem hexagonalen Grundriss abdeckt, in deren Zentrum sie angeordnet ist.

In der Praxis ist die Ausbreitung von Funkwellen häufig durch. Gebäude, Landschaft und andere Elemente beeinträchtigt. Überdies hat nicht jede Funkbasisstation die gleiche Sendeleistung und auch nicht eine radialsymmetrische Abstrahlung der Funkwellen. Aus diesem Grund werden häufig Funknetze anhand von groben Näherungen und anhand von Erfahrungswerten "provisorisch" aufgebaut und danach "ausgemessen", d.h., dass mittels eines Messempfängers an einer Vielzahl von Messpunkten die verfügbare Empfangsfeldstärke erfasst wird, um anhand dieser Messergebnisse das Funknetz sukzessive zu optimieren. Eine solche Erfassung der Funkabdeckung ist dabei mit einem hohen, oft manuellen Aufwand verbunden und überdies immer dann zu wiederholen, wenn das Funknetz selbst geändert wird oder sich ein beeinflussender Faktor (beispielsweise die Bebauung) ändert.

Häufig wird versucht, die Auswirkungen dieser Nachteile zu vermindern, indem Funknetze "überdimensioniert" werden, d.h., dass beispielsweise die Sendeleistung der Funkbasisstationen höher als notwendig gewählt wird, oder das eine unnötig hohe Anzahl an Basisstationen eingesetzt wird. Dies ist naturgemäß mit höheren Kosten und mit einer stärkerer Emission von hochfrequenten elektromagnetischen Wellen verbunden.

Die Daten einer erfassten Funkabdeckung werden nicht nur benutzt, um die Flächendeckung eines Funknetzwerkes sicherzustellen, sondern auch zur Ortung mobiler Endgeräte. Im einfachsten Fall wird dabei über das Funknetz das mobile Endgerät hinsichtlich der Identifikationsnummern aller an seinem Standort zum gegenwärtigen Zeitpunkt empfangbarer Basisstationen abgefragt. Dabei wird als Standort des mobilen Endgerätes eine Fläche ausgegeben, die der Schnittfläche aller Funkbereiche (Empfangsbereiche) der identifizierten Basisstationen entspricht. Die Genauigkeit der Ortbestimmung nimmt somit ab, je größer die Empfangsbereiche der Basisstationen sind.

In der Druckschrift DE 10 2004 010 182 B3 werden zur Erfassung einer Funkabdeckung die stationären Basisstationen eines Funknetzes verwendet. Dadurch werden manuelle Messungen eingespart und eine ausreichende Funkabdeckung in vielen Fällen sichergestellt. Allerdings gibt das Verfahren nur wenig Auskunft über die Funkfeldstärken zwischen den Basisstationen.

GB-A-2 361 387 offenbart ein tragbares Gerät zum Messen von Signalen das Interpolation nutzt um Werte für die zwischen gemessenen Orten liegende Punkte zu bekommen.

Bei den bekannten Mehrzellen-Mobilfunksystemen hat sich als nachteilig erwiesen, dass für einen sicheren Betrieb eine häufige und präzise Erfassung der Funkabdeckung durchgeführt werden muss, wobei eine solche Erfassung mit einem hohen Aufwand verbunden ist.

Es ist also eine Aufgabe der vorliegenden Erfindung, den Aufwand für die Ermittlung einer Funkabdeckung in Mehrzellen-Mobilfunksystemen zu vermindern.

Die Aufgabe wird durch ein Verfahren gemäß des Patentanspruchs 1 und durch eine Anordnung gemäß des Patentanspruchs 10 gelöst.

Die Lösung der Aufgabe sieht ein Verfahren zur Ermittlung einer Funkabdeckung in einem Mehrzellen-Mobilfunksystem mit einer Vielzahl von Basisstationen vor, wobei an einer Mehrzahl von jeweils ortsverschiedenen realen Messpunkten jeweils die reale Empfangsfeldstärke mehrerer oder aller der Basisstationen gemessen wird, und wobei die Messwerte für die realen Empfangsfeldstärken als reale Werte ortsbezogen in eine Datenbank eingetragen werden. Dabei werden aus den realen Empfangsfeldstärken für zwischen den Messpunkten und den Basisstation liegende virtuelle Messpunkte jeweils mittels eines Interpolationsverfahrens interpolierte Werte für die Empfangsfeldstärken mehrerer oder aller der Basisstationen berechnet und in die Datenbank eingetragen. Weiter werden für weitere geographische Punkte, an denen weder gemessene noch interpolierte Werte für die Empfangsfeldstärken zur Verfügung stehen, Ersatz-Werte für die Empfangsfeldstärke berechnet, wobei die Ersatz-Werte anhand der jeweiligen Sendeleistung, anhand der Entfernung der jeweiligen Basisstation zu diesen geographischen Punkt und anhand eines Ausbreitungsmodells errechnet werden, und wobei die so errechneten Ersatz-Werte in die Datenbank eingetragen werden. Durch den Einsatz eines solchen Verfahrens kann durch eine vergleichsweise geringe Anzahl von Messpunkten ("Stützstellen") für eine vergleichsweise hohe Anzahl von geographischen Punkten eine Aussage über die an einem jeweiligen geographischen Punkt empfangbaren Basisstationen und deren Empfangsfeldstärken gemacht werden. Dabei wird vorzugsweise auf "echte" Messwerte zurückgegriffen, diese werden ergänzt durch interpolierte Werte, die aus den realen Messwerten erzeugt wurden, und weiter wird die Datenbank ergänzt durch berechnete Werte für solche Orte, an denen weder gemessene Werte noch interpolierte Werte ermittelt werden können. Somit ergibt das Verfahren für jeden Ort Werte für die Funkabdeckung, die trotz einer geringen Anzahl an realen Messpunkten sehr genau mit den tatsächlichen Gegebenheiten übereinstimmen.

Die Lösung der Aufgabe sieht weiter eine Anordnung zur Ermittlung der Funkabdeckung in einem Mehrzellen-Mobilfunksystem vor, mit einer Mehrzahl von Basisstationen, mit einer Mehrzahl von realen Messpunkten, und mit einer Speichereinrichtung für eine Vielzahl von Empfangsfeldstärke-werten. In der Anordnung ist eine Auswerteeinrichtung vorgesehen, die zur Erfassung und zur Speicherung realer Werte für die Empfangsfeldstärke der Basisstationen an den realen Messpunkten ausgebildet ist, wobei die Auswerteeinrichtung zur Interpolation von aus den realen Messwerten gebildeten virtuellen Messwerten für zwischen den Messpunkten liegende virtuelle Messpunkte ausgebildet ist, wobei die Auswerteeinrichtung zur Berechnung von Ersatz-Werten für die Empfangsfeldstärke an weiteren Punkten anhand der Sendeleistung der Basisstationen, anhand der jeweiligen Entfernung der virtuellen Messpunkte von den Basisstationen und anhand eines Ausbreitungsmodells ausgebildet ist, und wobei die Auswerteeinrichtung zur Eintragung der realen Messwerte, der virtuellen Messwerte und der Ersatz-Werte und den dazu gehörenden Ortsangaben über den jeweiligen Stützpunkt in die Speichereinrichtung ausgebildet ist. Mit einer solchen Anordnung ist es möglich, mit wenigen Messpunkten detaillierte und genaue Angaben über die Funkabdeckung eines Mehrzellen-Mobilfunksystems zu ermitteln.

Die Lösung der Aufgabe sieht weiter ein Verfahren zur Positionsbestimmung eines mobilen Endgerätes in einem Mehrzellen-Mobilfunksystem vor, bei dem in einem ersten Schritt eine Funkabdeckung des Mehrzellen-Mobilfunksystems mit dem zuvor geschilderten Verfahren ermittelt wird, bei dem in einem zweiten Schritt durch das Mobilfunkgerät die Empfangsfeldstärke mehrerer oder aller empfangbaren Basisstationen erfasst wird, und bei dem in einem dritten Schritt die durch das Mobilfunkgerät erfassten Empfangsfeldstärken mit der ermittelten Funkabdeckung verglichen wird, wobei derjenige Messpunkt als Standort des Mobilfunkgerätes ausgegeben wird, dessen ermittelte Empfangsfeldstärke-Werte mit den von dem mobilen Endgerät erfassten Empfangsfeldstärke-Werten am besten übereinstimmt. Mit diesem Verfahren ist es möglich, die Position des mobilen Endgerätes mit einer hohen Genauigkeit zu erfassen.

Vorteilhafte Ausgestaltungen des Verfahrens sind in den Patentansprüchen 2 - 8 angegeben. Die dabei beschrieben Merkmale und Vorteile gelten sinngemäß auch für das Verfahren nach Patentanspruch 9 und für die erfindungsgemäße Anordnung.

Vorteilhaft werden die Messungen der realen Empfangsfeldstärken an den Orten der Basisstationen vorgenommen. Dadurch ist es möglich, ein orthogonales Raster, beispielsweise als Tabelle dargestellt, für die Speicherung und Interpolierung von Messwerten zu verwenden. Dabei ist es besonders einfach, wenn die Messungen der realen Empfangsfeldstärken durch die Basisstationen erfolgen, wobei abwechselend jeweils eine der Basisstationen als Messeinrichtung zur Messung der Empfangsfeldstärke zumindest einer der anderen Basisstationen verwendet wird. Dadurch können die Messwerte über die Netzinfrastruktur, also beispielsweise über das "Backbone" der Basisstationen, an eine Auswerteeinrichtung übertragen werden. Weiter erübrigt sich dadurch der Einsatz zusätzlicher Messempfänger und das damit verbundene Abschreiten- oder Abfahren des Mehrzellen-Mobilfunksystems.

Sowohl das Ausbreitungsmodell, mit dem anhand der Sendeleistung von Basisstationen und anhand der Entfernungswerte zu den Basisstationen eine ortsbezogene Empfangsfeldstärke abgeschätzt werden kann, als auch das Interpolationsverfahren zur Abschätzung von Werten für die Empfangsfeldstärke zwischen realen Messpunkten liefert umso genauere Werte, je besser die verwendeten Verfahren (Ausbreitungsmodell, Interpolationsverfahren) an die realen Gegebenheiten angepasst sind. Vorteilhaft werden reale Werte zur Auswahl und/oder zur Korrektur des verwendeten Ausbreitungsmodells und/oder des verwendeten Interpolationsverfahrens und deren jeweiliger Parameter eingesetzt. Ein einfaches Interpolationsverfahren kann verwendet werden, wenn die virtuellen Messpunkte auf geraden Verbindungslinien zwischen realen Messpunkten angeordnet sind. Vorteilhafter Weise werden dabei äquidistante Abstände zwischen den virtuellen Messpunkten gewählt.

Die Präzision des Verfahrens kann weiter verbessert werden, wenn für das Ausbreitungsmodell und/oder für das Interpolationsverfahren topographische Besonderheiten eingegeben und berücksichtigt werden. So können beispielsweise Wände oder Decken von Gebäuden, die üblicherweise eine Dämpfung von Funksignalen bewirken, als Dämpfungselemente oder als virtuelle Wegstrecken in das Ausbreitungsmodell aufgenommen werden.

Vorteilhafter Weise wird aus den in der Datenbank gespeicherten realen, den interpolierten und den berechneten Werten für die Empfangsfeldstärken eine Feldstärke-Matrix gebildet. Eine solche Feldstärke-Matrix ist dabei besonders leicht weiter zu verarbeiten, wenn die in ihr verzeichneten Feldstärke-Werte mit einem orthogonalen und äquidistanten geographischen Raster verknüpft sind.

Ausführungsbeispiele für das erfindungsgemäße Verfahren werden nachfolgend anhand der Zeichnungen erläutert. Sie dienen gleichzeitig der Erläuterung einer erfindungsgemäßen Anordnung.

Dabei zeigen:
- Figur 1a: in schematischer Darstellung eine Anordnung aus neun Basisstationen eines Mehrzellen-Mobilfunksystems und die mit den Basisstationen vorgenommenen Messungen der Empfangsfeldstärken,
- Figur 1b: eine tabellarische Darstellung von mit Basisstationen erfassten Empfangsfeldstärken,
- Figur 2: die Anordnung aus den neun Basisstationen mit geographischen Punkten, für die Empfangsfeldstärken mittels eines Ausbreitungsmodells errechnet werden,
- Figur 3: die Interpolation von Werten für die Empfangsfeldstärken zwischen zwei Basisstationen,
- Figur 4: eine schematische Darstellung, in der die neun Basisstationen und geographische Punkte eingezeichnet sind, für die gemessene Empfangsfeldstärken, interpolierte Empfangsfeldstärken und berechnete Empfangsfeldstärken verfügbar sind, und
- Figur 5: in schematischer Darstellung die Positionsbestimmung für ein mobiles Endgerät in dem Mehrzellen-Mobilfunksystem.

Die im Folgenden geschilderte Ermittlung einer Funkabdeckung kann zum einen zur Optimierung des Mehrzellen-Mobilfunksystems verwendet werden, und zum anderen zur Lokalisierung eines mobilen Endgerätes genutzt werden. Bei dem im Folgenden betrachteten Mehrzellen-Mobilfunksystem handelt es sich um eine Anordnung gemäß des DECT-Standards mit mehreren Basisstationen, einem so genannten DECT-Multicell-System. DAS Verfahren ist aber auch für andere Funknetze, beispielsweise GSM, UMTS, WLAN oder WiMax-Netze, nutzbar.

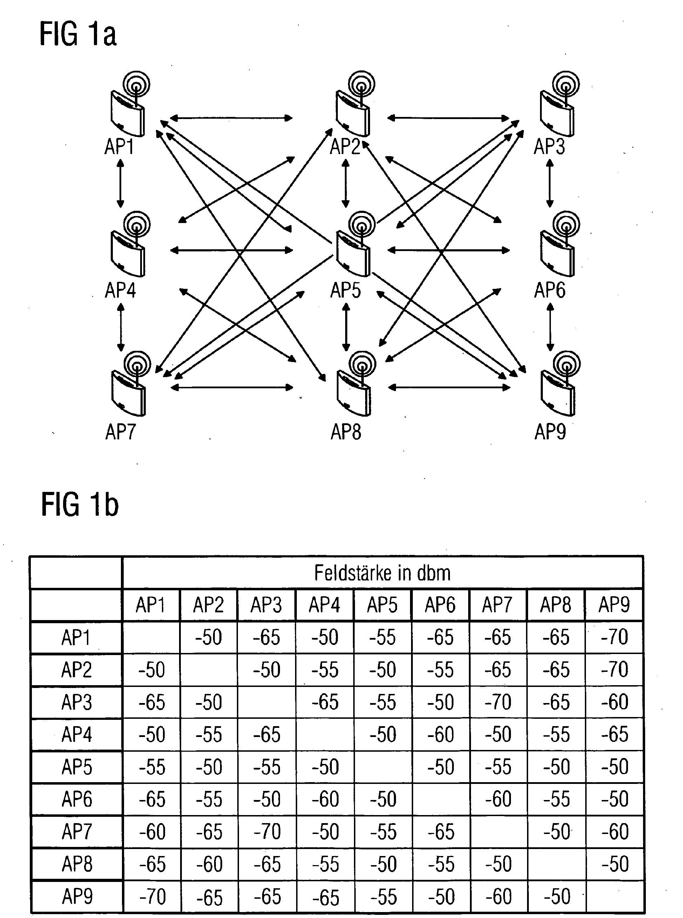

In der Figur 1a ist schematisch ein solches Mehrzellen-Mobilfunksystem dargestellt, wobei Basisstationen AP1...AP9 (Access-Points) in einem orthogonalen Raster in einem Gelände angeordnet sind. Dabei sind die Abstände zwischen den einzelnen Basisstationen AP1...AP9, die jeweilige Sendeleistung und die jeweilige Abstrahlcharakteristik der Basisstationen AP1...AP9 bekannt. Im vorliegenden Ausführungsbeispiel wird vereinfacht davon ausgegangen, dass die Basisstationen AP1...AP9 in einem quadratischen Raster angeordnet sind, alle mit derselben Sendeleistung arbeiten und bezogen auf die horizontale Fläche eine radialsymmetrische Ausbreitungscharakteristik aufweisen.

Das nachfolgend geschilderte Verfahren basiert darauf, dass für verschiedene (reale Messpunkte), so genannte Stützstellen, die Empfangsfeldstärke aller empfangbarer Basisstationen AP1...AP9 gemessen wird. Alternativ zu der Möglichkeit, durch eine Begehung des Geländes mit einem Messempfänger diese Messungen manuell durchzuführen, wird hier die Möglichkeit genutzt, nacheinander jeweils eine der Basisstationen AP1...AP9 in einen Messmodus umzuschalten und dabei am Standort der jeweiligen Basisstation AP1...AP9 die dort geltende Empfangsfeldstärke der anderen Basisstationen AP1...AP9 zu erfassen. Dabei kann zwar die Empfangsfeldstärke der jeweils messenden Basisstation AP1...AP9 nicht erfasst werden; es ist jedoch selbstverständlich, dass die Empfangsfeldstärke der "eigenen" Basisstation in der Nähe des jeweiligen Standortes einem Maximalwert entspricht, der sich u.a. aus der Sendeleistung der jeweiligen Basisstation AP1...AP9 ergibt.

Die durch die Basisstationen AP1...AP9 gemessenen Empfangsfeldstärken der jeweils anderen Basisstationen AP1...AP9 wird in einer (nicht dargestellten) Datenbank einer Auswerteeinrichtung gespeichert, die hier Bestandteil eines (ebenfalls nicht dargestellten) Kommunikationssystems ist, an dem die Basisstationen AP1...AP9 angeschlossen sind. Die dort gespeicherten Messwert-Paare sind in der Figur 1b tabellarisch aufgeführt, wobei anhand der Nicht-Symmetrie einiger Messwerte verdeutlicht wird, dass trotz der orthogonalen Anordnung der Basisstationen AP1...AP9, der "idealen" radialsymmetrischen Ausbreitung der Funkwellen und der homogenen Sendeleistung nicht zwangsläufig ein der Theorie entsprechendes Funkfeld resultiert. So ist beispielsweise am Standort der Basisstation AP7 die Basisstation AP6 mit -65 dbm empfangbar, wogegen am Standort der Basisstation AP6 die Basisstation AP 7 mit -60 dbm zu empfangen ist. Grund für diese "Unsymmetrie" können zum einen geographische Besonderheiten (z.B. Hindernisse in Form von Gebäuden, Pflanzen etc.) sein, und zum anderen können Messtoleranzen oder ähnliches Grund für die Abweichung vom "Idealzustand" sein.

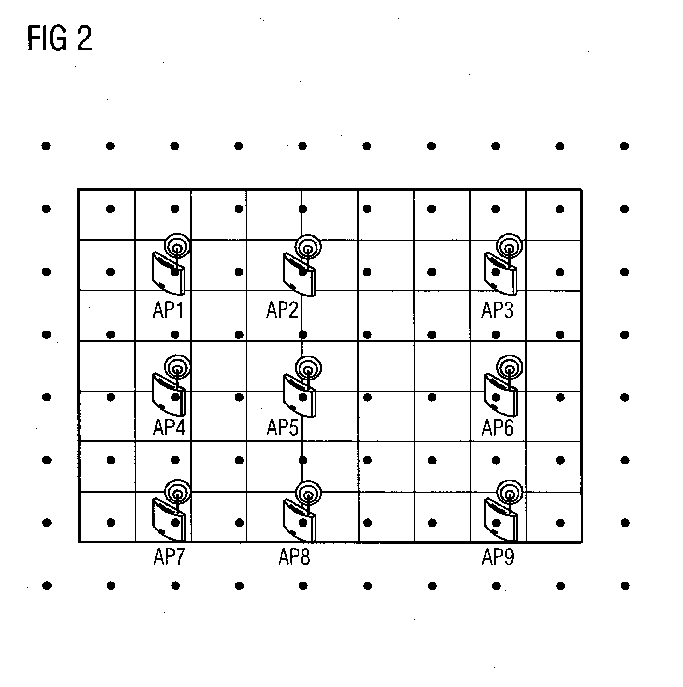

In der Figur 2 sind wieder die aus der Figur 1a bekannten Basisstationen AP1...AP9 dargestellt. Aus den (bekannten) Sendeleistungen der Basisstationen AP1...AP9 wird für alle in der Figur als schwarze Punkte dargestellte Stützstellen eine (theoretische) Empfangsfeldstärke berechnet, d.h., dass für jeden der dargestellten Punkte errechnet wird, mit welcher Funkfeldstärke welche Basisstation vermutlich empfangbar ist. Dazu wird im vorliegenden Beispiel ein einfaches Ausbreitungsmodell zu Grunde gelegt, welches davon ausgeht, dass die Empfangsfeldstärke für eine Basisstation mit steigender Entfernung von dieser Basisstation stetig abnimmt, und zwar radialsymmetrisch um die jeweilige Basisstation herum. Selbstverständlich können auch abweichende Ausbreitungsmodelle zu Grunde gelegt werden, insbesondere solche, die geographische Besonderheiten, beispielsweise Gebäude o.ä., berücksichtigen.

Im vorliegenden Ausführungsbeispiel ist es so, dass die geographischen Punkte für die "theoretischen" Ersatz-Werte für die Empfangsfeldstärken ebenfalls in einem orthogonalen Raster angeordnet sind, und zwar so, dass für jede Position der Basisstationen auch jeweils ein geographischer Punkt für die Stützstellen der Ersatz-Werte angeordnet ist. Somit steht für jede geographische Position einer Basisstation sowohl ein Satz für die tatsächlich gemessenen Empfangsfeldstärken der anderen Basisstationen AP1...AP9 zur Verfügung, als auch ein Satz von Werten, die anhand des Ausbreitungsmodells berechnet wurden. Im Idealfall müssten die tatsächlich gemessenen Werte und die errechneten Werte identisch sein; in der Praxis gibt es natürlich Abweichungen, die zum einen auf Messtoleranzen zurückzuführen sind, und zum anderen auf die selbstverständlich zwischen einem theoretischen Modell und einer praktischen Ausbreitung liegenden Abweichungen. Da dem Ausbreitungsmodell und den daraus resultierenden Algorithmen zu Berechnung der Ersatz-Werte aber zum einen Modellparameter und zum anderen Startwerte in Form von Sendefeldstärken bzw. Sendeleistungen und ggf. auch geographische Angaben zu Grunde liegen, können diese bei der Berechnung verwendeten Parameter optional mittels der gemessenen Werte korrigiert werden.

Im vorgenannten Fall, in dem das Raster der berechneten Ersatz-Werte identisch ist mit dem Raster, in dem die Messungen vorgenommen werden, werden die berechneten Ersatz-Werte für jeden Punkt; für den ein Messwert vorliegt, durch den Messwert ersetzt und in die Datenbank eingetragen. Für den Fall, dass die Raster nicht genau deckungsgleich sind, werden Ersatz-Werte durch Messwerte ersetzt, die in der Nähe liegen, sofern die geographische Abweichung einen Schwellwert (sog. "Fangbereich") unterschreitet. Dadurch liegen die in der Datenbank verzeichneten "Stützstellen" auch dann in einem einheitlichen orthogonalen Raster, wenn die Raster für die Ersatz-Werte und für die Messwerte zueinander verschoben sind oder eine unterschiedliche Schrittweite (Rastermaß) aufweisen.

Anhand der gemessenen "realen" Werte und anhand der Ersatz-Werte kann das Mehrzellen-Mobilfunksystem nach seiner Erstinstallation bereits verbessert (optimiert) werden, indem Anzahl und Lage der Basisstationen AP1...AP9 und deren Sendleistungen derart eingestellt werden, dass an jeder Stützstelle und somit auch mit einer hohen Wahrscheinlichkeit an jedem Punkt zwischen den Stützstellen mindestens eine oder zwei Basisstationen AP1...AP9 mit einer Mindest-Empfangsfeldstärke empfangbar sind. Eine solche Optimierung, insbesondere auch die ggf. damit verbundene Optimierung der Parameter für das Ausbreitungsmodell, wird immer dann wiederholt, wenn sich die geographischen Begebenheiten ändern, beispielsweise indem bauliche Veränderungen vorgenommen werden, oder wenn Basisstationen AP1...AP9 verändert oder versetzt werden.

Anhand der Figur 2 wurde erläutert, dass für diejenigen geographischen Punkte, die weder mit Basisstationen AP1...AP9 noch mit solchen Punkten, für die Ersatz-Werte errechnet wurden, übereinstimmen, angenommen werden kann, dass dort ähnliche Bedingungen (Empfangsfeldstärken) herrschen wie an den benachbarten Punkten (Stützstellen), für die bereits Werte in der Datenbank (gemessene Werte, Ersatz-Werte) eingetragen sind. Zur Gewährleistung einer Mindest-Empfangsfeldstärke reicht das auch oft schon aus, insbesondere dann, wenn an den "bekannten" Stützstellen Werte für die Empfangsfeldstärke vorliegen, die über das erforderliche Mindestmaß hinausgehen.

Dennoch ist es - insbesondere für die Zwecke der Funkortung - wünschenswert, genauere Informationen für die Empfangsfeldstärke an den Punkten zu haben, die zwischen den durch Messungen bekannten oder durch modellhafte Berechnungen "geschätzten" Stützstellen liegen.

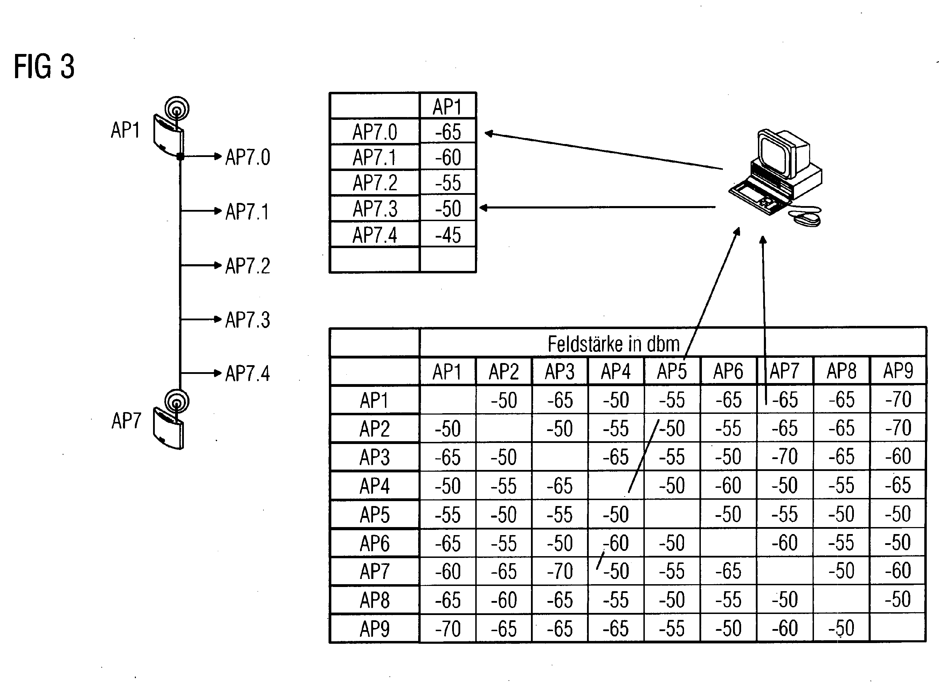

Neben den tatsächlich gemessenen Werten und den Ersatz-Werten, die für jede Basisstation AP1...AP9 aus dieser Sendeleistung der Basisstation und dem Abstand zu der Basisstation AP1...AP9 errechnet wird, wird eine dritte Art von Werten für die Empfangsfeldstärke durch Interpolation aus tatsächlichen Messwerten gebildet, nämlich die so genannten interpolierten Werte. In der Figur 3 ist die Interpolation für solche interpolierten Werte anhand einer Strecke zwischen den Basisstationen AP1 und AP7 schematisch dargestellt. Dazu wird zuerst aus der Tabelle in Figur 1b derjenige Wert ausgelesen, mit dem die Basisstation AP7 am Ort der Basisstation AP1 empfangbar ist, in diesem Fall -65dbm. Dieser im vorliegenden Ausführungsbeispiel durch die Basisstation AP1 selbst gemessene Wert stellt den Startwert für die Interpolation dar. Ein Parameter für die Interpolation ist weiterhin die Angabe über die Wegstrecke zwischen den Basisstationen AP1 und AP7 und die Anzahl der zu berechnenden Stützstellen, in diesem Fall fünf, aus der sich eine entsprechende Schrittweite ergibt. Neben der ersten Stützstelle, die sich aus dem Messergebnis der Basisstation AP1 (-65dbm) ergibt, wird für eine Interpolation zumindest eine weitere Stützstelle benötigt, in diesem Fall der von der Basisstation AP4 gemessene Wert, wobei die Basisstation AP4 auf dem direkten Wege zwischen den Basisstationen AP1 und AP7 liegt. Die Basisstation AP7 ist am Ort der Basisstation AP4 mit -50dbm empfangbar; dieser Wert wird für den "virtuellen Messpunkt" 7.3 verwendet, so dass durch eine lineare Interpolation die virtuellen Messpunkte 7.1 und 7.2 ermittelt und in die Tabelle bzw. die Datenbank eingetragen werden. Für den Weg zwischen dem Messpunkt 7.3, der genau genommen gleichzeitig ein virtueller und ein realer Messpunkt ist, und dem Ort der Basisstation AP7 können wiederum interpolierte Werte interpoliert werden, wobei für die Empfangsfeldstärke am Ort der Basisstation AP7 ein Wert geschätzt werden muss, weil dafür kein realer Messwert vorliegt. Alternativ können die Werte 7.4 etc. auch aus dem ersten Schritt (Werte 7.1, 7.2) extrapoliert werden; dann entfällt die "Schätzung" für die Stützstelle bei der Basisstation AP7.

Nach diesem Verfahren kann für alle direkten Wegstrecken zwischen den Basisstationen AP1...AP9 eine hohe Zahl interpolierter Werte für virtuelle Messpunkte errechnet werden, wobei diese interpolierten Werte im statistischen Mittel wenige von der Realität abweichen, als die berechneten Werte, weil die interpolierten Werte als Stützstellen reale Messwerte verwenden.

Wenn für die Datenbank keine erhöhte Zahl an Stützstellen gewünscht ist, werden in der Datenbank verzeichnete Ersatz-Werte durch die entsprechenden interpolierten Werte an den jeweiligen Stützstellen ersetzt, sofern nicht sogar ein realer Messwert für die jeweilige Stützstelle zur Verfügung steht. Falls dabei die geographische Position des jeweiligen interpolierten Wertes nicht genau mit einem Rasterpunkt für die Ersatz-Werte übereinstimmt (nicht-deckungsgleiche Raster), kann dennoch eine Ersetzung des Wertes vorgenommen wird, sofern die Abweichung (Entfernung) zwischen den beiden Punkten einen Schwellwert, beispielsweise 2 Meter, unterschreitet. Dadurch behält die Datenbank mit den Feldstärkewerten ihr Rastermaß und ihre orthogonale Struktur, was die spätere Verwendung der Datenbank erleichtert.

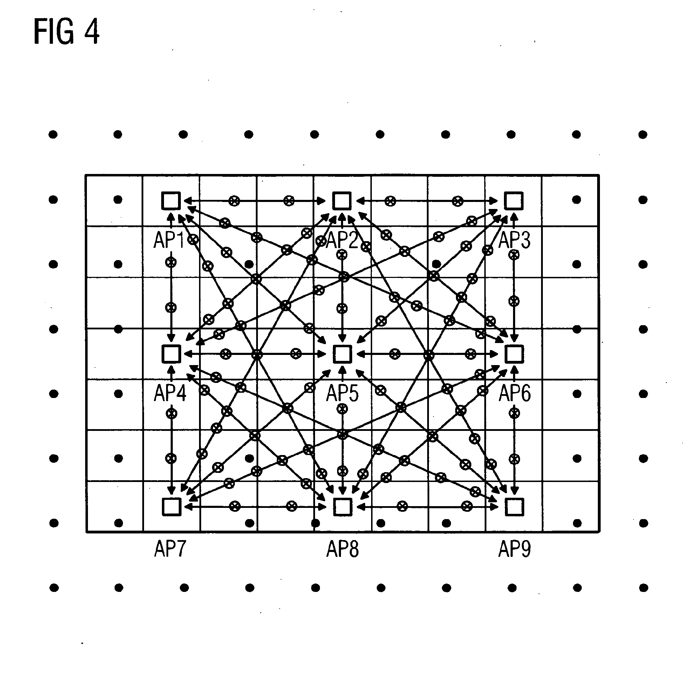

In der Figur 4 ist das Resultat der Erzeugung von Werten für die Empfangsfeldstärken nach allen drei bisher geschilderten Teil-Verfahren zusammengefasst. Dabei zeigen die schwarzen, ausgefüllten Kreise geographische Punkte, für die errechnete Werte für die Empfangsfeldstärken aller Basisstationen AP1...AP9 verwendet werden. An den quadratisch dargestellten Punkten, die in diesem Ausführungsbeispiel mit den Standorten der Basisstationen AP1...AP9 zusammenfallen, werden reale Messwerte verwendet, mit jeweiliger Ausnahme der Empfangsfeldstärke derjenigen Basisstation, die am jeweiligen Ort selbst platziert ist. Aus der Figur 1b ist schließlich ersichtlich, dass in der Diagonale der Tabelle keine Messwerte vorliegen. Schließlich sind für fast alle Punkte zwischen den Basisstationen AP1...AP9 die als durchgekreuzte Kreise dargestellt die Messpunkte (Stützstellen) für interpolierte Werte eingezeichnet, die, wo immer sie verfügbar sind, gegenüber den berechneten Werten bevorzugt werden. Die zugehörige Datenbank weist also für jeden der in der Figur 4 dargestellten Punkte einen Satz mit neun Werten für die Empfangsfeldstärken der neun Basisstationen AP1...AP9 auf, wobei jeder dieser Werte bestmöglich mit der Realität übereinstimmt.

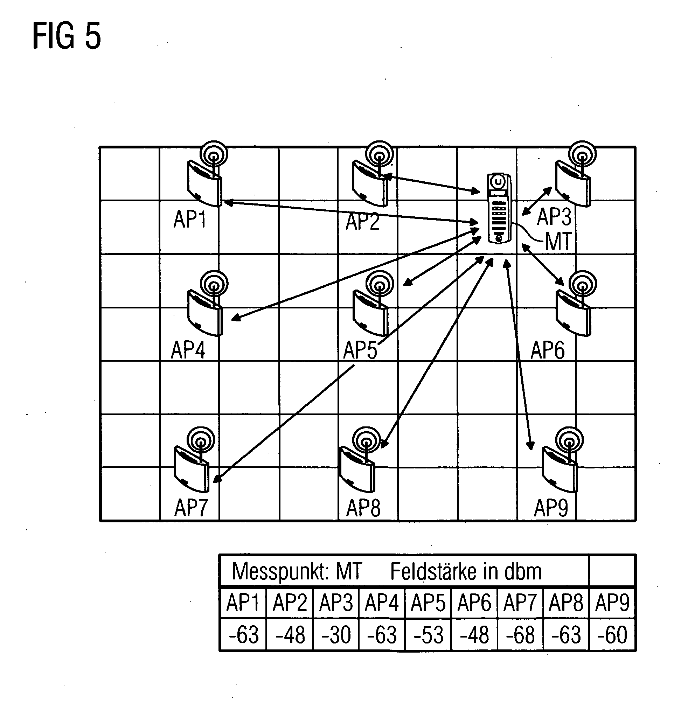

In der Figur 5 ist schematisch die Positionsbestimmung (Ortung) eines mobilen Endgerätes in dem Mehrzellen-Mobilfunksystem, welches aus den Basisstationen AP1...AP9 gebildet wird, dargestellt. Zur Positionsbestimmung erhält das mobile Endgerät über seine Funkschnittstelle einen Befehl, nach dessen Empfang das mobile Endgerät MT einen Datensatz zurück übermittelt, der hier aus neun Messwerten besteht, wobei die neun Messwerte die Empfangsfeldstärke für jede der neun empfangenen Basisstationen AP1...AP9 umfasst. Eine Auswerteeinrichtung (nicht dargestellt) in einem zentralen Server vergleicht nun die Datensätze der Datenbank mit dem vom mobilen Endgerät MT erzeugten Datensatz und ermittelt dabei aus der Datenbank denjenigen Datensatz, der die geringste Abweichung zu dem gemessenen Datensatz aufweist. Im vorliegenden Ausführungsbeispiel wird dazu für jede Basisstation AP1...AP9 eine Differenz gebildet zwischen dem Messwert und dem Wert in der Datenbank, und zwar für jeden in der Datenbank verfügbaren Messpunkt (Stützstelle). Für jeden verfügbaren Messpunkt wird die Quadratsumme der Abweichungen für die Basisstationen AP1...AP9 gebildet und als Wert gespeichert. Bei demjenigen Messpunkt, bei dem dieser Wert am kleinsten ist, wird davon ausgegangen, dass er dem derzeitigen Standort des mobilen Endgerätes MT am nächsten liegt.

Alternativ zu dieser einfachen Berechnungsmethode können auch andere Berechnungsmethoden eingesetzt werden. Insbesondere ist es möglich, eine geringe Anzahl von naheliegenden Messpunkten zu ermitteln und zwischen den einzelnen Feldstärkewerten dieser Messpunkte nochmals eine Interpolation zur Erzeugung weiterer virtueller Messpunkte vorzunehmen. Zur Ausgabe der somit bestimmten Position ist es hilfreich, wenn zu jedem Messpunkt in der Datenbank eine Koordinatenangabe und/oder eine Ortsbezeichnung gespeichert ist. Alternativ können in der Datenbank nur solche Messpunkte gespeichert sein, die beispielsweise einem quadratischen Raster entsprechen, so dass durch eine Ordnungsnummer des entsprechenden Datensatzes in der Datenbank auf einen konkreten Ort geschlossen werden kann.

## Patentansprüche

1. Verfahren zur Ermittlung einer Funkabdeckung in einem Mehrzellen-Mobilfunksystem mit einer Vielzahl von Basisstationen (AP1...AP9),
wobei an einer Mehrzahl von jeweils ortsverschiedenen realen Messpunkten jeweils die reale Empfangsfeldstärke mehrerer oder aller der Basisstationen (AP1..AP9) gemessen wird,
wobei die Messwerte für die realen Empfangsfeldstärken als reale Werte ortsbezogen in eine Datenbank eingetragen werden,
**dadurch gekennzeichnet,**
**dass** die Messungen der realen Empfangsfeldstärken an den Orten der Basisstationen (AP1...AP9) erfolgen, und
**dass** die Messungen der realen Empfangsfeldstärken durch die Basisstationen (AP1...AP9) erfolgen, wobei abwechselnd jeweils eine der Basisstationen (AP1...AP9) als Messeinrichtung zur Messung der Empfangsfeldstärke zumindest einer der anderen Basisstationen verwendet wird.

2. Verfahren nach Anspruch 1,
**dadurch gekennzeichnet,**
**dass** aus den realen Empfangsfeldstärken für zwischen den Messpunkten und den Basisstationen (AP1...AP9) liegende virtuelle Messpunkte jeweils mittels eines Interpolationsverfahrens interpolierte Werte (Ap7.1...Ap7.4) für die Empfangsfeldstärken mehrerer oder aller der Basisstationen (AP1...AP9) berechnet und in die Datenbank eingetragen werden.

3. Verfahren nach Anspruch 2,
**dadurch gekennzeichnet,**
**dass** für weitere geographische Punkte, an denen weder gemessene noch interpolierte Werte für die Empfangsfeldstärken zur Verfügung stehen, Ersatz-Werte für die Empfangsfeldstärke berechnet werden, wobei die Ersatz-Werte anhand der jeweiligen Sendeleistung, anhand der Entfernung der jeweiligen Basisstation (AP1..AP9) zu diesem geographischen Punkt und anhand eines Ausbreitungsmodells errechnet werden, und wobei die so errechneten Ersatz-Werte in die Datenbank eingetragen werden.

4. Verfahren nach einem der vorhergehenden Ansprüche,
**dadurch gekennzeichnet,**
**dass** reale Werte zur Auswahl und/oder zur Korrektur des für die Errechnung von Feldstärkewerten benutzten Ausbreitungsmodells und/oder dessen Parameter verwendet werden.

5. Verfahren nach einem der vorhergehenden Ansprüche,
**dadurch gekennzeichnet,**
**dass** reale Werte zur Auswahl und/oder zur Korrektur des verwendeten Interpolationsverfahrens verwendet werden.

6. Verfahren nach einem der vorhergehenden Ansprüche,
**dadurch gekennzeichnet,**
**dass** die virtuellen Messpunkte auf geraden Verbindungslinien zwischen realen Messpunkten angeordnet sind.

7. Verfahren nach einem der vorhergehenden Ansprüche,
**dadurch gekennzeichnet,**
**dass** für das Ausbreitungsmodell und/oder für das Interpolationsverfahren topographische Besonderheiten eingegeben und berücksichtigt werden.

8. Verfahren nach einem der vorhergehenden Ansprüche,
**dadurch gekennzeichnet,**
**dass** aus den in der Datenbank gespeicherten realen, interpolierten und berechneten Werten für die Empfangsfeldstärken eine Feldstärke-Matrix gebildet wird.

9. Verfahren zur Positionsbestimmung eines mobilen Endgerätes (MT) in einem Mehrzellen-Mobilfunksystem,
**dadurch gekennzeichnet,**
**dass** in einem ersten Schritt eine Funkabdeckung des Mehrzellen-Mobilfunksystems mit einem Verfahren gemäß einem der Patentansprüche 1 - 8 ermittelt wird,
**dass** in einem zweiten Schritt durch das mobile Endgerät (MT) die Empfangsfeldstärke mehrerer oder aller empfangbarer Basisstationen (AP1...AP9) erfasst wird, und
**dass** in einem dritten Schritt die durch das mobile Endgerät (MT) erfassten Empfangsfeldstärken mit der ermittelten Funkabdeckung verglichen wird, wobei derjenige Messpunkt als Standort des Mobilfunkgerätes ausgegeben wird, dessen ermittelte Empfangsfeldstärke-Werte mit den von dem mobilen Endgerät (MT)erfassten Empfangsfeldstärke-Werten am besten übereinstimmt.

10. Anordnung zur Ermittlung der Funkabdeckung in einem Mehrzellen-Mobilfunksystem, mit einer Mehrzahl von Basisstationen (AP1..AP9),
mit einer Mehrzahl von realen Messpunkten, und
mit einer Speichereinrichtung für eine Vielzahl von Empfangsfeldstärke-Werten,
wobei eine Auswerteeinrichtung vorgesehen ist, die zur Erfassung und zur Speicherung realer Werte für die Empfangsfeldstärke der Basisstationen (AP1...AP9) an den realen Messpunkte ausgebildet ist,
wobei die Auswerteeinrichtung zur Interpolation von aus den realen Messwerten gebildeten virtuellen Messwerten (AP7.1..AP7.4) für zwischen den Messpunkten liegende virtuelle Messpunkte ausgebildet ist,
wobei die Auswerteeinrichtung zur Berechnung von Ersatz-Werten für die Empfangsfeldstärke an weiteren Punkten anhand der Sendeleistung der Basisstationen (AP1...AP9), anhand der jeweiligen Entfernung der virtuellen Messpunkte von den Basisstationen (AP1..AP9) und anhand eines Ausbreitungsmodells ausgebildet ist, und wobei
die Erfassungseinrichtung zur Eintragung der realen Messwerte, der virtuellen Messwerte (AP7.1...AP7.4) und der Ersatz-Werte und den dazu gehörenden Ortsangaben über den jeweiligen Messpunkt in die Speichereinrichtung ausgebildet ist,
**dadurch gekennzeichnet,**
**dass** die Basisstationen (AP1..AP9) zur Messung der realen Empfangsfeldstärken eingerichtet sind, wobei abwechselnd jeweils eine der Basisstationen (AP1...AP9) als Messeinrichtung zur Messung der Empfangsfeldstärke zumindest einer der anderen Basisstationen eingerichtet sind, und
wobei die Basisstationen (AP1..AP9) zur Übermittlung dieser gemessenen Empfangsfeldstärken zu der Auswerteeinrichtung eingerichtet sind.

## Claims

1. Method for determination of the radio coverage in a multicell mobile radio system having a multiplicity of base stations (AP1...AP9),
wherein the actual reception field strength of a plurality or all of the base stations (AP1..AP9) is measured at each of a plurality of actual measurement points, which are each at different locations,
wherein the measured values of the actual reception field strengths are entered as actual values on a position-related basis in a database,
**characterized**
**in that** the measurements of the actual reception field strengths are carried out at the locations of the base stations (AP1...AP9), and
**in that** the measurements of the actual reception field strengths are carried out by the base stations (AP1...AP9) with one of the base stations (AP1..AP9) in each case being used alternately as the measurement device for measurement of the reception field strength of at least one of the other base stations.

2. Method according to Claim 1,
**characterized**
**in that** values (Ap7.1...Ap7.4), which have in each case been interpolated by means of an interpolation method, for the reception field strengths of a plurality or all of the base stations (AP1...AP9) are calculated from the actual reception field strengths for virtual measurement points which are located between the measurement points and the base stations (AP1...AP9), and are entered in the database.

3. Method according to Claim 2,
**characterized**
**in that** substitute values for the reception field strength are calculated for further geographical points at which neither measured nor interpolated values are available for the reception field strengths, with the substitute values being calculated on the basis of the respective transmission power, on the basis of the range to the respective base station (AP1...AP9) from this geographic point, and on the basis of a propagation model, and with the substitute values calculated in this way being entered in the database.

4. Method according to one of the preceding claims,
**characterized**
**in that** actual values are used for selection and/or for correction of the propagation model, used for calculation of the field strength values, and/or its parameters.

5. Method according to one of the preceding claims,
**characterized**
**in that** actual values are used for selection and/or for correction of the interpolation method that is used.

6. Method according to one of the preceding claims,
**characterized**
**in that** the virtual measurement points are arranged on straight connecting lines between actual measurement points.

7. Method according to one of the preceding claims,
**characterized**
**in that** special topographical features are entered in and taken into account for the propagation model and/or the interpolation method.

8. Method according to one of the preceding claims,
**characterized**
**in that** a field strength matrix is formed from the actual, interpolated and calculated values for the reception field strengths stored in the database.

9. Method for finding the position of a mobile terminal (MT) in a multicell mobile radio system,
**characterized**
**in that**, in a first step, the radio coverage of the multicell mobile radio system is determined using a method according to one of patent Claims 1 to 8,
**in that**, in a second step, the mobile terminal (MT) detects the reception field strength of a plurality or all of the base stations (AP1...AP9) which can be received, and
**in that**, in a third step, the reception field strengths which have been detected by the mobile terminal (MT) are compared with the determined radio coverage, with that measurement point being output as the location of the mobile radio whose determined reception field strength values best match the reception field strength values detected by the mobile terminal (MT).

10. An arrangement for determination of the radio coverage in a multicell mobile radio system having a plurality of base stations (AP1...AP9),
having a plurality of actual measurement points, and
having a memory device for a multiplicity of reception field strength values,
wherein an evaluation device is provided and is designed to detect and store actual values for the reception field strength of the base stations (AP1..AP9) at the actual measurement points,
wherein the evaluation device is designed for interpolation of virtual measured values (AP7.1..AP7.4), which are formed from the actual measured values, for virtual measurement points which are located between the measurement points,
wherein the evaluation device is designed to calculate substitute values for the reception field strength at further points on the basis of the transmission power of the base stations (AP1..AP9), on the basis of the respective range from the virtual measurement points to the base stations (AP1..AP9) and on the basis of a propagation model, and wherein
the detection device is designed to enter the actual measured values, with virtual measured values (AP7.1..AP7.4) and the substitute values, as well as the location details about the respective measurement point associated with them, in the memory device,
**characterized**
**in that** the base stations (AP1..AP9) are designed to measure the actual reception field strengths, with one of the base stations (AP1..AP9) in each case being configured alternately as a measurement device for measurement of the reception field strength of at least one of the other base stations, and wherein the base stations (AP1..AP9) are designed to transmit these measured reception field strengths to the evaluation device.

## Revendications

1. Procédé de détermination d'une couverture radio dans un système de radiocommunication mobile multicellulaire comportant plusieurs stations de base ( AP1 à AP9 ),
selon lequel on mesure l'intensité de champ reçu réelle de plusieurs des stations de base ou de toutes les stations de base ( AP1 à AP9 ) en plusieurs points de mesure réels situés à chaque fois en un lieu différent et
selon lequel on enregistre comme valeurs réelles dans une base de données, avec une référence au lieu, les valeurs mesurées pour les intensités de champ reçu réelles,
**caractérisé par le fait que** les mesures des intensités de champ reçu réelles sont effectuées sur les lieux des stations de base ( AP1 à AP9 ) et que les mesures des intensités de champ reçu réelles sont effectuées par les stations de base ( AP1 à AP9 ), l'une des stations de base ( AP1 à AP9 ) étant utilisée à chaque fois alternativement comme dispositif de mesure pour la mesure de l'intensité de champ reçu au moins de l'une des autres stations de base.

2. Procédé selon la revendication 1, **caractérisé par le fait que**, à partir des intensités de champ reçu réelles, on calcule pour des points de mesure virtuels situés entre les points de mesure et les stations de base ( AP1 à AP9 ) des valeurs ( Ap7.1 à Ap7.4 ) interpolées à chaque fois au moyen d'un procédé d'interpolation pour les intensités de champ reçu de plusieurs des stations de base ou de toutes les stations de base (AP1 à AP9) et on les enregistre dans la base de données.

3. Procédé selon la revendication 2, **caractérisé par le fait que**, pour plusieurs points géographiques pour lesquels on ne dispose ni de valeurs mesurées ni de valeurs interpolées pour les intensités de champ reçu, on calcule des valeurs de remplacement pour l'intensité de champ reçu, les valeurs de remplacement étant calculées à l'aide de la puissance d'émission respective, de l'éloignement de la station de base respective (AP1 à AP9) à ce point géographique et d'un modèle de propagation et les valeurs de remplacement ainsi calculées étant enregistrées dans la base de données.

4. Procédé selon l'une des revendications précédentes, **caractérisé par le fait que** des valeurs réelles sont utilisées pour la sélection et/ou la correction du modèle de propagation utilisé pour le calcul de valeurs d'intensité de champ et/ou pour la sélection et/ou la correction des paramètres dudit modèle de propagation.

5. Procédé selon l'une des revendications précédentes, **caractérisé par le fait que** des valeurs réelles sont utilisées pour la sélection et/ou la correction du procédé d'interpolation utilisé.

6. Procédé selon l'une des revendications précédentes, **caractérisé par le fait que** les points de mesure virtuels sont disposés sur des lignes droites de liaison entre des points de mesure réels.

7. Procédé selon l'une des revendications précédentes, **caractérisé par le fait que**, pour le modèle de propagation et/ou pour le procédé d'interpolation, on entre des particularités topographiques et on en tient compte.

8. Procédé selon l'une des revendications précédentes, **caractérisé par le fait que**, à partir des valeurs réelles, interpolées et calculées qui ont été mémorisées dans la base de données pour les intensités de champ reçu, on forme une matrice d'intensités de champ.

9. Procédé de détermination de la position d'un terminal mobile ( MT ) dans un système de radiocommunication mobile multicellulaire, **caractérisé par le fait que**
dans une première étape, on détermine une couverture radio du système de radiocommunication mobile multicellulaire avec un procédé selon l'une des revendications 1 à 8,
dans une deuxième étape, on acquiert avec le terminal mobile (MT) l'intensité de champ reçu de plusieurs des stations de base ou de toutes les stations de base ( AP1 à AP9 ), et
dans une troisième étape, on compare les intensités de champ reçu acquises avec le téléphone mobile ( MT ) à la couverture radio déterminée, celui des points de mesure dont les valeurs d'intensité de champ reçu déterminées coïncide le mieux avec les valeurs d'intensité de champ reçu acquises par le téléphone mobile ( MT ) étant délivré en sortie comme position du terminal de radiocommunication mobile.

10. Dispositif de détermination de la couverture radio dans un système de radiocommunication mobile multicellulaire, comportant plusieurs stations de base ( AP1 à AP9 ), plusieurs points de mesure réels et un dispositif de mémorisation pour plusieurs valeurs d'intensité de champ reçu,
dans lequel il est prévu un dispositif d'évaluation qui est conçu pour acquérir et enregistrer des valeurs réelles pour l'intensité de champ reçu des stations de base ( AP1 à AP9 ) aux points de mesure réels,
dans lequel le dispositif d'évaluation est conçu pour interpoler des valeurs de mesure virtuelles ( AP7.1 à AP7.4 ), formées à partir des valeurs mesurées réelles, pour des points de mesure virtuels situés entre les points de mesure,
dans lequel le dispositif d'évaluation est conçu pour calculer des valeurs de remplacement pour l'intensité de champ reçu en d'autres points à l'aide de la puissance d'émission des stations de base ( AP1 à AP9 ), de l'éloignement respectif des points de mesure virtuels aux stations de base ( AP1 à AP9 ) et d'un modèle de propagation et
dans lequel le dispositif d'acquisition est conçu pour enregistrer dans le dispositif de mémorisation les valeurs mesurées réelles, les valeurs de mesure virtuelles ( AP7.1 à AP7.4 ) et les valeurs de remplacement ainsi que les indications de localisation associées au point de mesure respectif,
**caractérisé par le fait que** les stations de base ( AP1 à AP9 ) sont conçues pour la mesure des intensités de champ reçu réelles, l'une des stations de base (AP1 à AP9) étant utilisée à chaque fois alternativement comme dispositif de mesure pour la mesure de l'intensité de champ reçu au moins de l'une des autres stations de base et les stations de base ( AP1 à AP9 ) étant conçues pour transmettre ces intensités de champ reçu mesurées au dispositif d'évaluation.
